Europäisches Patentamt

European Patent Office

Office européen des brevets

(19)

(11) Veröffentlichungsnummer : **0 057 272**
**B1**

(12) **EUROPÄISCHE PATENTSCHRIFT**

(45) Veröffentlichungstag der Patentschrift :
08.02.84

(21) Anmeldenummer : 81109734.4

(22) Anmeldetag : 17.11.81

(51) Int. Cl.³ : **F 04 D  29/38**, B 64 C  27/46,
**F 01 D   5/28**

(54) **Rotorblatt in Schalenbauweise.**

(30) Priorität : 04.02.81 DE 3103710

(43) Veröffentlichungstag der Anmeldung :
11.08.82 Patentblatt 82/32

(45) Bekanntmachung des Hinweises auf die Patenterteilung : 08.02.84 Patentblatt 84/06

(84) Benannte Vertragsstaaten :
FR GB NL SE

(56) Entgegenhaltungen :
CH-A-   369 589
DE-A- 2 832 098
FR-A- 2 304 512
FR-A- 2 375 033
US-A- 3 950 115

(73) Patentinhaber : **Messerschmitt-Bölkow-Blohm GmbH**
**Robert-Koch-Strasse**
**D-8012 Ottobrunn (DE)**

(72) Erfinder : **Hahn, Michael, Dipl.-Ing.**
**Bahnhofstrasse 15b**
**D-8012 Ottobrunn (DE)**
Erfinder : **Wackerle, Peter-Martin, Dipl.-Ing.**
**Oderweg 7**
**D-8012 Ottobrunn (DE)**

Rotorblatt in Schalenbauweise

Die Erfindung betrifft ein Rotorblatt gemäß dem Oberbegriff des Anspruchs 1, insbesondere für Ventilatoren bzw. Lüfter größter Abmessungen, Großwindenergieanlagen und dgl.

Für solche Rotorblätter wird ein gelenkloser Anschluß an der Rotornabe mittels zugbelasteter Bolzen (sog. Zugbolzen) bevorzugt. Bisher hat aber ein solcher Blattanschluß, sofern man ohne zusätzlichen Beschlag für die Schalenwurzel auskommen wollte, auf eine Ausbildung auch der Blattschale in Schalenbauweise mit einem hinsichtlich Zugkräften weichen Stützkern zwischen zwei Deckhäuten aus faserverstärktem Kunststoff beschränkt werden müssen (DE-OS 28 32 098). Hiervon abgesehen ist man bei den Großwindenergieanlagen bzw. deren Rotoren, welche eine Blattanstellwinkel-Verstellmöglichkeit erfordern, wegen des Flügelprofils der Schalenwurzel auf ein zusätzliches an die Ringform des Blattwinkellagers angepaßtes flanschartiges Lagerzwischenstück angewiesen. Das ist u. a. aus Gründen des Leichtbaus unerwünscht. Zwar kann bei einem mit einem kreisringförmigen Anschlußende versehenen Flügel gemäß der CH-A-369 589 auf ein solches Zwischenstück verzichtet werden, jedoch müssen stattdessen die Faserstränge zu schlaufenförmigen Anschlußaugen umgelegt werden, die in der Gesamtheit wiederum einen Anschlußflansch bilden. Das bedingt einen beträchtlichen Fertigungsaufwand.

Der Erfindung liegt die Aufgabe zugrunde, ein Rotorblatt der eingangs genannten Gattung für einen gelenklosen Anschluß an der Rotornabe so auszugestalten, daß zwischen der Schalenwurzel und einem Blattwinkellager unmittelbar eine Zugbolzenverbindung herstellbar ist.

Diese Aufgabe ist gemäß dem Kennzeichen des Anspruchs 1 gelöst, wonach zum Aufbau des rundum aus Unidirektionalfadensträngen aufgebauten und somit hochzugbelastbaren Anschlußendes der (Blatt-)Schalenwurzel ausschließlich tragende Blattbereiche bildende Faserstränge in einer Weise beitragen, daß vom Blattflügel zum Anschlußende der Schalenwurzel ein gegenüber dem Blattflügel in der Festigkeit ungeminderter, biegesteifer Übergang besteht. Es läßt sich sogar eine Erhöhung der Schwenksteifigkeit des Rotorblattes durch bloßes Verlängern der Unidirektionalfaserstränge des gewölbtflächigen Hinterkantenabschnittes in den Blattflügelhinterkantenabschnitt hinein erreichen (Anspruch 3). Für diese Unidirektionalfaserstränge ist es im übrigen von Vorteil, wenn der gewölbtflächige Hinterkantenabschnitt eine vom Blattflügel bzw. dessen Hinterkantenabschnitt zum kreisringförmigen Anschlußende zunehmende Breite aufweist (Anspruch 4). Infolgedessen sind nämlich ausgehend vom Anschlußende im Verlauf bzw. mit sich vermindernder Breite des gewölbtflächigen Hinterkantenabschnitts Unidirektionalfaserstränge desselben zu schäften, so daß aus dem Blattanschluß resultierende Längskräfte von diesem Hinterkantenabschnitt aus in den Schalen-Zwischenabschnitt (mit kreuzweiser Faserorientierung) eingeleitet und hierüber durch Schub in die Unidirektionalfaserstränge der Blattschalenvorderkante übertragen werden, welche bei dem Rotorblatt die Tragholmfunktion erfüllt.

Schließlich erfüllt das Rotorblatt gemäß der Erfindung neben der Forderung nach einer einfachen Formbauweise (Anspruch 2) zugleich die Forderung nach einer strömungsgünstigen Blattform auch im Bereich der Blattwurzel, und zwar wegen der zur (Blatt-)Profiltiefe relativ großen Breite des gewölbtflächigen Hinterkantenabschnittes ; in einfacher Weise kann durch kantige Übergänge zwischen dem gewölbtflächigen Hinterkantenabschnitt und den übrigen Blattschalenabschnitten (Anspruch 6) diese günstige Strömungsform noch vervollständigt werden. Und nicht zuletzt hat diese Rotorblattgestaltung in einer fasergerechten Bauweise den Vorteil, daß die für den Blattanschluß geforderten Zugbolzen ohne weiteres unter Vorspannung gesetzt werden können, um eine gleichbleibende Mindeststeifigkeit des Blattanschlusses im Betrieb sicherzustellen ; diesbezüglich kommt den bevorzugten Ausgestaltungen der Erfindung gemäß den Ansprüchen 7 und 8 aus sicherheitstechnischen Gründen besondere Bedeutung zu.

Ein Ausführungsbeispiel der Erfindung wird nachfolgend näher erläutert. Hierzu zeigt die Zeichnung in

Figur 1 perspektivisch von einem Rotorblatt nur die Wurzel und einen kurzen Abschnitt des anschließenden Blattflügels,

Figur 2 einen Längsschnitt durch die Blattschale am Ende der Blattwurzel gemäß Fig. 1 in Verschraubung mit einem Flansch.

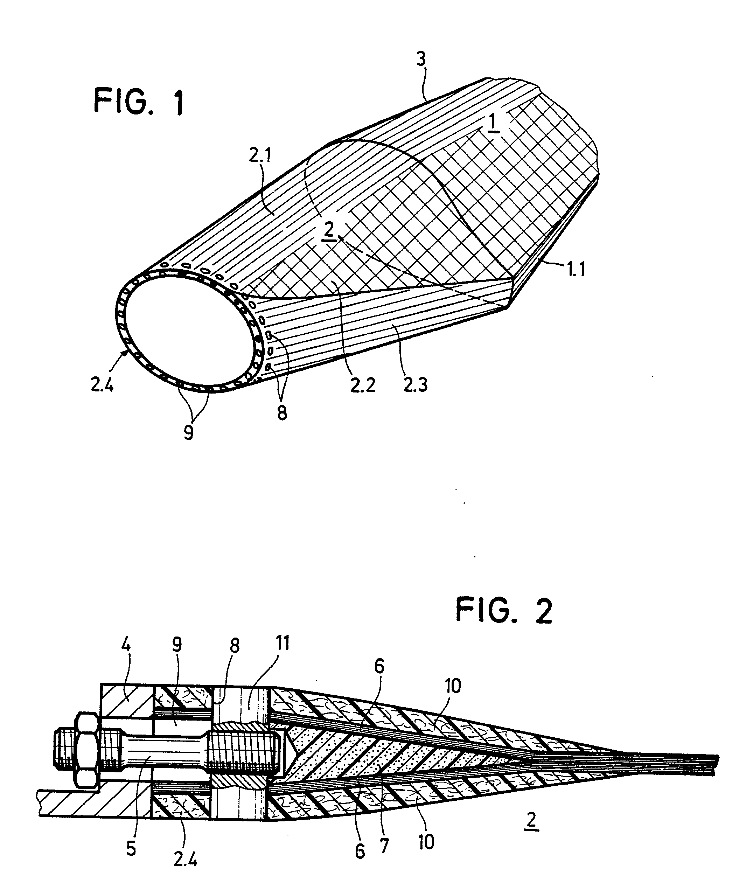

Die teilweise Darstellung eines Rotorblattes bzw. seiner Blattschale aus faserverstärktem Kunststoff gemäß Fig. 1 soll insbesondere verdeutlichen, daß eine an den Blattflügel 1 anschliessende (Blatt-)Schalenwurzel 2 für den Flattanschluß an einen kreisring- oder scheibenförmigen Flansch 4, (Fig. 2) aus einer abwickelbaren Fläche geformt ist, wobei diese sich bei der Fertigung — z. B. in einer Laminierform — aus mehreren Einzelflächen zusammensetzen läßt, nämlich aus einem (Schalenwurzel-)Vordekantenabschnitt 2.1 und einem Zwischenabschnitt 2.2 (je Blattseite) sowie einem Hinterkantenabschnitt 2.3 Die Faserorientierung ist entsprechend den in diese Flächen in Blattlängs- und Blattquerrichtung eingetragenen Hilfslinien. Diese verdeutlichen, daß der tragende Bereich der Blattschale, nämlich die Blattvorderkante (Blattnase) 3 aus in Blattlängsrichtung sich erstreckenden Unidirektionalfasersträngen gebildet wird, welche über den Blattvorderkantenbereich des Blattflügels 1 hinaus in die Schalenwurzel 2 verlaufen und hierbei am Aufbau des zu einem Kreisring geformten (Schalenwurzel-)Anschlußendes 2.4 etwa zu zwei Dritteln beitragen. Der übrige Querschnitt des Anschlußendes 2.4 wird von den — deswegen gewölbtflächigen — Hinterkantenabschnitt 2.3 der Schalenwurzel 2 bildenden Unidirektionalfasersträngen ausgefüllt, so daß schließlich das Anschlußende 2.4 einen vollständig unidirektionalen (homogenen) Faseraufbau aufweist. Hierbei wird man als Zwischenabschnitt 2.2, welcher eine kreuzweise Faserorientierung aufweist und somit für eine Kraftübertragung aus dem Hinterkantenabschnitt 2.3 in den tragenden Vorderkantenabschnitt 2.1 (durch Schub) wirksam wird, u. a. aus fertigungstechnischen Gründen einen entsprechenden Bereich einer im übrigen nicht dargestellten Blattaußenhülle fungieren lassen, welche (also auch) die Unidirektionalfaserstränge bedeckt. Da der gewölbtflächige Hinterkantenabschnitt 2.3 eine vom Blattflügel 1 zum kreisringförmigen Anschlußende 2.4 zunehmende Breite aufweist, werden die im Verlauf dieses Hinterkantenabschnittes 2.3 vor dem Blattflügelhinterkantenabschnitt 1.1 durch Schäftung endenden Unidirektionalfaserstränge zur Kraftübertragung über den Zwischenabschnitt 2.2 in den Vorderkantenabschnitt 2.1 beitragen und werden die darüber hinaus in den Blattflügelhinterkantenabschnitt 1.1 verlaufenden Unidirektionalfaserstränge zusätzlich die Blattsteifigkeit in Blattschwenkrichtung erhöhen.

Selbstverständlich können die vorgenannten Flächenabschnitte der Blattschalenwurzel 2, wie üblicherweise auch bei der Blattflügelschale praktiziert, bedarfsweise ihrerseits aus noch mehr oder aus weniger Teilstücken gefertigt werden.

Wie schließlich insbesondere Fig. 2 vergrößert noch zeigt, ist die Verbindung der Schalenwurzel 2 bzw. ihres kreisringförmigen Anschlußendes 2.4 mit dem vorgenannten Flansch 4 (z. B. eines Lageraußenringes) über Zugbolzen 5 hergestellt. Hierzu sind die Unidirektionalfaserstränge zu zwei mit Abstand übereinanderliegenden Lagen 6 vorzugsweise von jeweils gleicher Dicke geteilt, wobei der Zwischenraum eine keilförmige Kernfüllung 7 z. B. aus Schaumkunststoff aufweist, in welcher für einen freien Zugang der Zugbolzen 5 zu Querbohrungen 8 Durchgänge 9 belassen sind. Wegen der Querbohrungen 8 empfiehlt sich eine Verstärkung der Schalenwurzel 2 im Bereich der Teillagen 6 durch Decklagen 10 mit kreuzweiser Faserorientierung, bedarfsweise mit zusätzlichen Schichten mit unidirektionaler Faserorientierung u. U. in Blattlängs- und querrichtung ; hierbei läßt sich durch den zusätzlichen Einsatz von kohlefaserverstärktem Kunststoff (z. B. neben dem üblicherweise verwendeten glasfaserverstärktem Kunststoff) durchaus ein thermisches Ausdehnungsverhalten des Anschlußendes 2.4 entsprechend dem Ausdehnungsverhalten des (üblicherweise metallischen) Flansches 4 erreichen. Das ist für die erwünschte gleichbleibende Steifigkeit des Blattanschlusses im Betrieb von Bedeutung. In diesem Sinne hat die schließlich über einen in der jeweiligen Querbohrung 8 sitzenden Bolzen 11 mit der Schalenwurzel 2 hergestellte Verbindung des jeweiligen Zugbolzens 5 den Vorteil, daß dieser unter Vorspannung gesetzt werden kann. Zweckmäßigerweise wird man als Zugbolzen 5, wie dargestellt, sog. Dehnschrauben verwenden, so daß der zugehörige Querbohrungs-Bolzen 11 für diese Verbindung bloß eine querlaufende Gewindebohrung aufzuweisen braucht.

## Ansprüche

1. Rotorblatt in Schalenbauweise, wobei die Blattschale aus faserverstärktem Kunststoff besteht und deren Fasern wenigstens im Bereich der Blattvorderkante (3) (Blattnase) in Blattlängsrichtung sich erstreckende Unidirektionalfaserstränge bilden, welche über den Bereich des Blattflügels (1) hinaus in die für den Blattanschluß bestimmte Schalenwurzel (2) verlaufen, deren Anschlußende (2.4) zu einem Kreisring geformt ist, dadurch gekennzeichnet, daß die über den Umfang mit Querbohrungen (8) versehene Schalenwurzel (2) einen von den Unidirektionalfasersträngen gebildeten Schalen-Vorderkantenabschnitt (2.1) aufweist, welcher über einen Schalen-Zwischenabschnitt (2.2) mit kreuzweiser Faserorientierung (je Blattseite) in Verbindung mit einem gewölbtflächigen Schalen-Hinterkantenabschnitt (2.3) aus Unidirektionalfasersträngen steht, und diese am Umfang des Anschlußendes (2.4) den von Unidirektionalfasersträngen der Blattvorderkante bzw. des Schalen-Vorderkantenabschnitts (2.1) freien Bereich ausfüllen.

2. Rotorblatt nach Anspruch 1, dadurch gekennzeichnet, daß die Schalenwurzel (2) eine zu einer ebenen Fläche abwickelbare (gestrakte) Form aufweist.

3. Rotorblatt nach Anspruch 1, dadurch gekennzeichnet, daß Unidirektionalfaserstränge des gewölbtflächigen Hinterkantenabschnittes (2.3) über die Schalenwurzel hinaus in den Blattflügelhinterkantenabschnitt (1.1) verlaufen.

4. Rotorblatt nach Anspruch 1 oder 3, dadurch gekennzeichnet, daß der gewölbtflächige Hinterkantenabschnitt (2.3) eine vom Blattflügel (1) bzw. dessen Hinterkantenabschnitt (1.1) zum Anschlußende (2.4) zunehmende Breite aufweist.

5. Rotorblatt nach Anspruch 1 und 3, dadurch gekennzeichnet, daß der Schalen-Zwischenabschnitt (2.2) ein Bereich einer die Unidirektionalfaserstränge bedeckenden Außenhülle der Blattschale ist.

6. Rotorblatt nach Anspruch 1, dadurch gekennzeichnet, daß zwischen dem gewölbtflächigen Hinterkantenabschnitt (2.3) und den übrigen Blattschalenabschnitten (2.2, 1.1) kantige Übergänge bestehen.

7. Rotorblatt nach Anspruch 1 mit für den Blattanschluß in der Schalenwurzel (2) in Querbohrungen (8) sitzenden Bolzen (11), die mit je einem in Blattlängsrichtung sich erstreckenden Zugbolzen (5) in Eingriff stehen, dadurch gekennzeichnet, daß im Bereich des Schalenwurzel-Anschlußendes (2.4) die Unidirektionalfaserstränge zu zwei mit Abstand übereinanderliegenden Lagen (6) geteilt sind und der Zwischenraum eine Kernfüllung (7) aufweist, in welcher für die Zugbolzen (5) Durchgänge (9) zu den Querbohrungen (8) belassen sind.

8. Rotorblatt nach Anspruch 7, dadurch gekennzeichnet, daß die Schalenwurzel (2) im Bereich der Teillagen (6) zusätzliche Decklagen (10) aus faserverstärktem Kunststoff aufweist.

## Claims

1. A rotor blade formed by a shell method of construction, in which respect the blade shell consists of fibre-reinforced plastics material and the fibres thereof form, at least in the region of the front edge (3) of the blade (the blade nose), unidirectional fibre strands which extend in the longitudinal direction of the blade and which extend beyond the region of the blade wing (1) into the shell root (2) which is intended for blade connection and the connection end (2.4) of which is shaped into a circular ring, characterised in that the shell root (2) is provided over its circumference with transverse bores (8) and has a shell front edge portion (2.1) which is formed by the unidirectional fibre strands and communicates, by way of a shell intermediate portion (2.2) having crosswise fibre orientation (per blade side), with an arched-surface shell rear edge portion (2.3) consisting of unidirectional fibre strands, and, at the periphery of the connection end (2.4), these latter strands fill the region which is not taken up by the unidirectional fibre strands of the blade front edge or of the shell front edge portion (2.1) respectively.

2. A rotor blade according to claim 1, characterised in that the shell root (2) has a streamlined (loft) shape which is capable of merging into a flat surface.

3. A rotor blade according to claim 1, characterised in that unidirectional fibre strands of the arched-surface rear edge portion (2.3) extend beyond the shell root into the blade wing rear edge portion (1.1).

4. A rotor blade according to claim 1 or 3, characterised in that the width of the arched-surface rear edge portion (2.3) increases from the blade wing (1) or the rear edge portion (1.1) thereof respectively to the connection end (2.4).

5. A rotor blade according to claim 1 and 3, characterised in that the shell intermediate portion (2.2) is a region of an outer case wich covers the unidirectional fibre strands of the blade shell.

6. A rotor blade according to claim 1, characterised in that angular transitions exist between the arched-surface rear edge portion (2.3) and the adjoining blade shell portions (2.2, 1.1).

7. A rotor blade according to claim 1 having bolts (11) which are seated, for blade connection, in transverse bores (8) in the shell root (2) and which each interlock with one tie bolt (5) extending in the longitudinal direction of the blade, characterised in that in the region of the shell root connection end (2.4) the unidirectional fibre strands are split into two layers (6) which are superjacent at a spacing from each other and the interspace has a core rilling (7) in which passages (9) are provided for the tie bolts (5) to the transverse bores (8).

8. A rotor blade according to claim 7, characterised in that the shell root (2) has, in the region of the part layers (6), additional cover layers (10) consisting of fibre-reinforced plastics material.

## Revendications

1. Pale de rotor en construction coque dont la coque est réalisée en matière plastique renforcée de fibres et dont les fibres, au moins dans la zone du bord d'attaque (3) de la pale (nez de pale), forment des brins de fibres unidirectionnelles qui sont disposés dans le sens longitudinal de la pale et, se prolongeant au-delà de la surface portante (1) de la pale, s'étendent dans le pied (2) de la coque destiné au raccordement de la pale et dont l'extrémité de raccordement (2.4) est faconnée en un anneau de cercle, caractérisée par le fait que le pied (2) de la coque muni de perçages transversaux (8) sur sa périphérie comporte une section (2.1) du bord d'attaque qui est formée de brins de fibres unidirectionnelles et raccordée, par une section intermédiaire (2.2) à orientation croisée des fibres (de chaque côté de la pale), à une section (2.3) du bord de fuite à surface bombée formée de brins de fibres unidirectionnelles et que ceux-ci, sur la périphérie de l'extrémité de raccordement (2.4), occupent la zone exempte des brins de fibres unidirectionnelles du bord d'attaque de la pale et de la section (2.1) du bord d'attaque de la coque.

2. Pale de rotor selon la revendication 1, caractérisée par le fait que le pied (2) de la coque a une forme (carénée) développable en une surface plane.

3. Pale de rotor selon la revendication 1, caractérisée par le fait que les brins de fibres unidirectionnelles de la section (2.3) du bord de fuite à surface bombée dépassent du pied de la coque et se prolongent dans la section (1.1) du bord de fuite de la surface portante de la pale.

4. Pale de rotor selon la revendication 1 ou 3, caractérisée par le fait que la section (2.3) du bord de fuite à surface bombée a une largeur qui va en augmentant de la surface portante (1) de la pale ou de sa section (1.1) du bord de fuite à l'extrémité de raccordement (2.4).

5. Pale de rotor selon les revendications 1 et 3, caractérisée par le fait que la section intermédiaire (2.2) de la coque est une zone d'une enveloppe extérieure, recouvrant les brins de fibres unidirectionnelles, de la coque de la pale.

6. Pale de rotor selon la revendication 1, caractérisée par le fait que des transitions à arêtes vives sont réalisées entre la section (2.3) du bord de fuite à surface bombée et les autres sections (2.2, 1.1) de la coque de la pale.

7. Pale de rotor selon la revendication 1, avec pour le raccordement de la pale, des axes (11) qui sont placés dans des perçages transversaux (8) du pied (2) de la coque et qui sont respectivement en prise avec un boulon-tirant (5) s'étendant dans le sens longitudinal de la pale, caractérisée par le fait que dans la zone de l'extrémité de raccordement (2.4) du pied de la coque, les brins de fibres unidirectionnelles sont divisés en deux couches (6) situées à distance l'une au-dessus de l'autre et que l'espace intermédiaire comporte un remplissage central (7) dans lequel des passages (9) sont aménagés pour permettre aux boulons-tirants (5) d'accéder aux perçages transversaux (8).

8. Pale de rotor selon la revendication 7, caractérisée par le fait que le pied (2) de la coque dans la zone des couches partielles (6) comporte des couches de recouvrement supplémentaires (10) en matière plastique renforcée de fibres.

FIG. 1

FIG. 2